# EUROPEAN PATENT APPLICATION

(11) **EP 3 739 528 A1**
(43) Date of publication of application: **18.11.2020**
(21) Application number: 19173976.2
(22) Date of filing: 13.05.2019
(51) Int. Cl.: G06Q 10/06

(54) **METHOD FOR DETERMINING AT LEAST ONE OUTPUT DATA STREAM AS CONFIGURATION BASED ON EVOLVING INPUT DATA STREAMS**

(71) Applicant: Siemens Aktiengesellschaft, 80333 München (DE)
(72) Inventor: Mogoreanu, Serghei, 81827 München (DE); Shyam Sunder, Swathi, 81549 München (DE)

(57) **Abstract**

The invention relates Computer-implemented method for determining at least one output data stream (10) as configuration, comprising the steps of Receiving at least one input data stream (10) (S1); Providing a plurality of match data streams (10) (S2), wherein each data stream (10) comprises at least one action (12); Preprocessing the plurality of match data streams (10) into processed match data streams (10) (S3); and Determining the at least one output data stream (10) as configuration by matching the at least one input data stream (10) to the plurality of processed match data streams (10) using pattern mining (S4). Further, the invention relates to a corresponding computer program product and system.

## Description

### 1. Technical field

The present invention relates to a computer-implemented method for determining at least one output data stream as configuration. Further, the invention relates to a corresponding computer program product and system.

### 2. Prior art

Configuration software is known from the prior art, such as the TIA selection tool. The configuration can be equally referred to as workflow or sequence of actions. The user can perform a sequence of actions until the desired result is achieved using the configuration software. For example, in case of an industrial automation, the user chooses or adds a controller, a power supply or other component and selects e.g. the desired number of digital inputs for the selected controller until an automation solution with desired functionality is fully configured. Further exemplary steps include performing and adapting a more specific configuration of an already chosen component. At each step, the user either selects from a set of pre-defined options or enters custom requirements that describe the component being configured.

Configuration software of this kind can be roughly divided into two categories: those that guide the user through a pre-defined configuration, and those that allow users to select components and perform configuration steps in the order of their choice.

The pre-defined configuration is more structured and easier to handle for an inexperienced user leading to reduced time needed for performing common configurations. However, the pre-defined configuration can be limiting for more advanced users, who deal with less common configurations. The disadvantage is that the pre-defined configuration is static and not intuitive resulting in increased time spent on each configuration.

There is a need to provide a dynamic approach, which allows the user to configure an optimal configuration in view of the the specific type of project being configured, the user's preferences and any other factors.

It is therefore an objective of the invention to provide a method for determining at least one output data stream as configuration based on evolving input data streams, allowing a dynamic adaptation of the configuration depending on user's needs and other factors and thus for an increased flexibility.

### 3. Summary of the invention

This problem is according to one aspect of the invention solved by a computer-implemented method for determining at least one output data stream as configuration, comprising the steps of:
a. Receiving at least one input data stream;
b. Providing a plurality of match data streams, wherein
c. each data stream comprises at least one action;
d. Preprocessing the plurality of match data streams into processed match data streams; and
e. Determining the least one output data stream as configuration by
   matching the at least one input data stream to the plurality of processed match data streams using pattern mining.

Accordingly, the invention is directed to a method for determining at least one output data stream as configuration, in particular as configuration for a component or unit of a technical system, an industrial plant, device or any other technical system.

In the first two steps, two input data sets are received or provided, namely the input data stream or data stream to be matched and the match data streams against which the input data stream is matched in step e. The input data sets can be received via one or more interfaces and/or can be stored in a storage unit for data storage and data transmission from the storage unit.

The data stream can be equally referred to as sequence, click-stream or workflow. The data stream each comprises one or more actions. The actions can be considered as steps for selecting or configuring a component, unit or system, accordingly configuration steps.

The received match data streams are processed into processed match data streams. In particular, the complete data stream including all actions, partial data stream with a part of the actions and/or any patterns are extracted from the received match data streams to generate the processed match data streams. Accordingly, the processed match data stream can be the complete match data stream or part of it. Distinct criteria can be applied for said extraction.

In a last step, the input data stream is matched to the processed match data streams using pattern mining. In other words, the input data stream is compared against an amount of known data with typical data streams or patterns occurring in the data streams to determine the output data stream as configuration.

This way, the method according to the invention is efficient and intuitive for the users. Contrary to prior art, the configuration can be dynamically adapted and is not static. The dynamic adaptation allows the users to flexibly configure automation solutions depending on their preferences and needs.

This results in an improved and more reliable configuration which is finally applied on a component or unit of a technical system, an industrial plant, device or any other technical system. In other words, automation solutions can be configured in an improved manner.

The method according to the invention is important for configuration software, associated applications, but may be also applied to various other use cases that involve a series of user-performed actions, like configuring shopping baskets on e-commerce platforms or custom product configurators.

In one aspect the data stream is a sequential data stream with a sequence of actions, in particular a clickstream. Accordingly, the data stream can be considered as data sequence or sequence with one or more actions, wherein the order of the actions is specified and important. Referring to the above, the complete sequences, subsequences and/or patterns are extracted from the received match data streams as processed match data streams. Accordingly, the processed match data streams can be the complete sequence or a partial sequence.

In another aspect the pattern mining is a sequential pattern mining. Accordingly, any techniques or approaches, which are suitable for sequential data, can be applied to discover sequential patterns or patterns within the sequences. Thus, the method can be applied in a flexible manner according to the specific application case, underlying technical system and user requirements.

In another aspect the at least one action is an action selected from the group comprising
Selecting at least one component or unit of a technical system, an industrial plant, device or technical system,
Setting or adapting at least one property of at least one component or unit of a technical system, an industrial plant, device or technical system, and
Setting or adapting at least one function of at least one component or unit of a technical system, an industrial plant, device or technical system.

Accordingly, the action can be any configuration step for selecting or configuring a component or unit of a technical system, an industrial plant, device or any other system. For example, the first action A1 might be the step of selecting a component, the second subsequent action A2 might be the step of setting a property or function of the selected component from A1. The sequence or data stream comprises the actions A1 and A2. Thus, all possible or desired configuration steps can be flexibly chosen, arranged and applied on the component or unit of a technical system, an industrial plant, device or technical system to be configured.

In another aspect the plurality of match data streams in step b. is related to at least one element of interest selected from the group comprising:
a project, a company, a region, a country, a user, application area and target industry.

Accordingly, the match data streams can be assigned to one or more elements of interest, such as project type, user group and/or a specific user. In other words, the match data streams can be divided into distinct data sets or match data stream sets, e.g. resulting in match data steams across all projects, match data streams across users of a certain group, match data streams of a user. In other words, the match data streams can be filtered or divided into data sets depending on filter criteria or elements. This has a particularly advantageous effect on the accuracy and reliability of the matching in step e. since the matching considers more specific data.

In another aspect step d. Preprocessing the plurality of match data streams into a processed plurality of match data streams
Comprises the step of
Extracting a plurality of subsequences or patterns as processed match data streams on the basis of the plurality of match data streams.

In another aspect the subsequence or pattern has a specified length and/or other criteria.

Accordingly, subsequences or patterns are determined on the basis of the match data streams, see further above. They can be e.g. determined depending on similarity of data streams.

In another aspect the method further comprises the step of Determining at least one alternative output data stream as alternative configuration using clustering or classification on the basis of the processed match data streams. Accordingly, further steps can be performed. One or more alternative data streams can be provided as output data streams leading to the same result. One or more actions can be added to the output data stream or removed from the output data stream. The data stream of shorter length or shortest length can be advantageous as alternative configuration with regard to a reduction in configuration time. The alternative configuration can be determined depending on distinct criteria, optimizing aspects, e.g. costs, time, user preferences or priorities.

In another aspect the method further comprises the step of Performing at least one action.

In another aspect the at least one action is an action selected from the group comprising:
- Outputting the at least one configuration, the at least one alternative configuration and/or any other related notification;
- Storing the at least one configuration, the at least one alternative configuration and/or any other related notification;
- Displaying the at least one configuration, the at least one alternative configuration and/or any other related notification; and
- Transmitting the at least one configuration, the at least one alternative configuration and/or any other related notification to a computing unit for further processing; and
- Applying the at least one configuration, the at least one alternative configuration on a component or unit of a technical system, an industrial plant, device or technical system.

Accordingly, the output data, data of intermediate method steps and/or any other related information can be further handled. One or more actions can be performed. The action can be equally referred to as measure. The actions can be triggered depending on the user preferences or other criteria. The actions can be performed by one or more computing units of the system. The actions can be performed sequentially or simultaneously. Actions include e.g. storing and processing steps. The advantage is that appropriate actions can be performed in a timely manner.

First, the configuration can be outputted and displayed to a user by means of a display unit. The user can check and confirm the configuration to be applied on the unit to be configured or any other system. This way, the configuration is solely applied and installed after this additional check leading to an increased reliability of the configuration and underlying system. Further, one or more alternative configurations can be recommended or presented to the user for selection. The advantage is that the configuration can be dynamically and flexibly adapted depending on the user preferences and/or underlying technical system.

A further aspect of the invention is a computer program product directly loadable into an internal memory of a computer, comprising software code portions for performing the steps according to any one of the preceding claims when said computer program product is running on a computer.

A further aspect of the invention is a system for determining at least one output data stream as configuration, comprising:
a. Receiving unit for receiving at least one input data stream;
b. Receiving unit for providing a plurality of match data streams, wherein
c. each data stream comprises at least one action;
d. Preprocessing unit for preprocessing the plurality of match data streams into processed match data streams; and
e. Determining unit for determining the at least one output data stream as configuration by
   matching the at least one input data stream to the plurality of processed match data streams using pattern mining.

The units may be realised as any devices, or any means, for computing, in particular for executing a software, an app, or an algorithm. For example, the preprocessing unit and/or determining unit may comprise a central processing unit (CPU) and a memory operatively connected to the CPU. The preprocessing unit and/or determining unit may also comprise an array of CPUs, an array of graphical processing units (GPUs), at least one application-specific integrated circuit (ASIC), at least one field-programmable gate array, or any combination of the foregoing. The units may comprise at least one module which in turn may comprise software and/or hardware. Some, or even all, modules of the units may be implemented by a cloud computing platform.

### 4. Short description of the drawings

In the following detailed description, presently preferred embodiments of the invention are further described with reference to the following figures:
Fig. 1 illustrates a flowchart of the method according to the invention.
Fig. 2 illustrates a data stream according to an embodiment of the present invention.

### 5. Detailed description of preferred embodiments

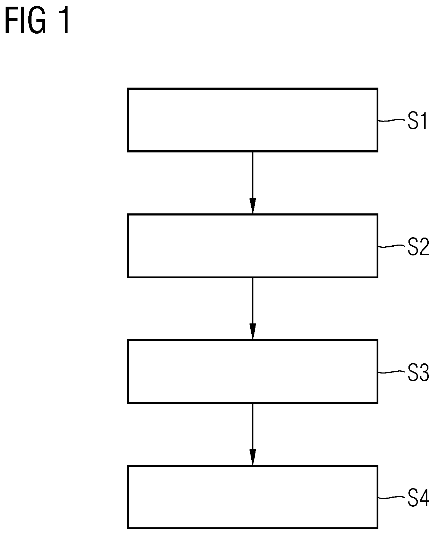

Fig. 1 illustrates a flowchart of the method according to the invention with the method steps S1 to S4. The method steps S1 to S4 will be explained in the following in more detail.

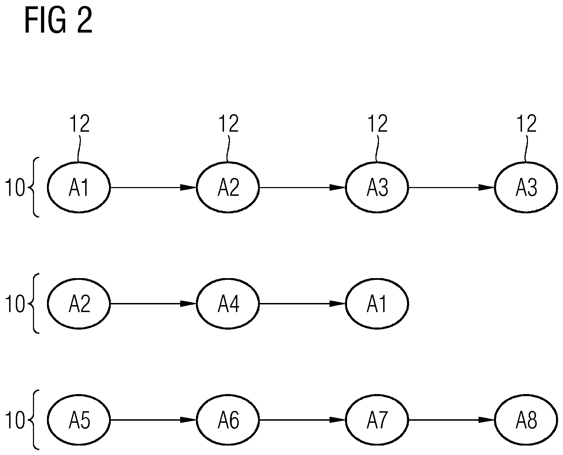

In the first step S1, the input data stream 10 is received. In the second step S2, the match data streams 10 are provided. Each data stream 10 comprises one or more actions 12. The data stream can be in particular data about the click patterns or clicks of users, as shown in Figure 2 referring to as click-stream data. The nodes in the data stream 10 correspond to the actions 12 or steps for selecting or configuring individual components.

The data streams 10 according to Figure 2 each comprise several actions 12. For example, the first data stream S1 comprises the actions A1, A2, A3 and A3. The data stream can be equally referred to as sequence, click-stream or workflow.

### Preprocessing the plurality of match data streams into processed match data streams S3

In this step S3, typical data streams are extracted as processed match data streams 10 on the basis of the provided match data streams 10. For example, data streams are extracted for the different project types e.g. a chemical plant or a conveyor belt. An exemplary implementation for this step S3 is shown as pseudo code further below, according to which subsequences, sequences or patterns of various lengths are extracted on the basis of the match data streams. These patterns could either correspond to complete data streams or be part of the data streams. For example, three different data sets or levels of data streams can be determined: data streams across all projects, data streams across users of a certain group e.g. company, application area, etc. and data streams of the user in question, obtained from past projects.

```
 from itertools import tee
 def extract_patterns(data, length):
     """Extract all patterns of specified length from the
     data"""
     patterns = tee (data, length)
     for i in range (1, length) :
          for j in patterns[i:]:
               next (j, None)
     return zip(*patterns)
 def extract_typical_workflows (data, length) :
     """Extract typical workflows of specified length from
 the
     data"""
     workflows = { }
     for d in data:
          for p in extract_patterns (d, length):
               if str(p) in workflows:
                    workflows[str(p)] += 1
               else:
                    workflows[str(p)] = 1
     return workflows
```

### Determining the at least one output data stream as configuration S4

In this step S4, the input data stream is matched against the processed match data streams using sequential pattern mining. This step can also consider the preference being given either to user-specific data streams or to the expert data streams. As part of the settings in a configuration software, the user can be provided with the option of specifying the order of preference for the above workflows. Furthermore, the data stream can be dynamically adapted during the configuration based on certain actions performed by the user.

Data mining or pattern mining refers to the problem of finding interesting, useful, and even unexpected patterns in data. Sequential pattern mining is a data mining task specialized to discover sequential patterns, i.e., patterns within sequential data, according to which the order of the actions of the data stream is important. Based on the nature of the data stream, distinct sequential pattern mining techniques can be applied on the data streams, such as frequent pattern mining, string mining and graph pattern mining. For example, if the data has a graph structure, graph pattern mining would be more suitable.

## Claims

1. Computer-implemented method for determining at least one output data stream (10) as configuration, comprising the steps of:
a. Receiving at least one input data stream (10) (S1);
b. Providing a plurality of match data streams (10) (S2), wherein
c. each data stream (10) comprises at least one action (12) ;
d. Preprocessing the plurality of match data streams (10) into processed match data streams (10) (S3); and
e. Determining the at least one output data stream (10) as configuration by
matching the at least one input data stream (10) to the plurality of processed match data streams (10) using pattern mining (S4).

2. Method according to claim 1, wherein the data stream is a sequential data stream with a sequence of actions, in particular a clickstream.

3. Method according to claim 2, wherein the pattern mining is a sequential pattern mining.

4. Method according any of the preceding claims, wherein the at least one action is an action selected from the group comprising
Selecting at least one component or unit of a technical system, an industrial plant, device or technical system, Setting or adapting at least one property of at least one component or unit of a technical system, an industrial plant, device or technical system, and
Setting or adapting at least one function of at least one component or unit of a technical system, an industrial plant, device or technical system.

5. Method according any of the preceding claims, wherein the plurality of match data streams in step b. is related to at least one element of interest selected from the group comprising:
a project, a company, a region, a country, a user, application area and target industry.

6. Method according to any of the preceding claims, wherein step d. Preprocessing the plurality of match data streams into a processed plurality of match data streams Comprises the step of
Extracting a plurality of subsequences or patterns as processed match data streams on the basis of the plurality of match data streams.

7. Method according to claim 6, wherein the subsequence or pattern has a specified length and/or other criteria.

8. Method according to any of the preceding claims, wherein the method further comprises the step of Determining at least one alternative output data stream as alternative configuration using clustering or classification on the basis of the processed match data streams.

9. Method according to any of the preceding claims, wherein the method further comprises the step of Performing at least one action.

10. Method according claim 9,
wherein the at least one action is an action selected from the group comprising:
- Outputting the at least one configuration, the at least one alternative configuration and/or any other related notification;
- Storing the at least one configuration, the at least one alternative configuration and/or any other related notification;
- Displaying the at least one configuration, the at least one alternative configuration and/or any other related notification;
- Transmitting the at least one configuration, the at least one alternative configuration and/or any other related notification to a computing unit for further processing; and
- Applying the at least one configuration, the at least one alternative configuration on a component or unit of a technical system, an industrial plant, device or technical system.

11. A computer program product directly loadable into an internal memory of a computer, comprising software code portions for performing the steps according to any one of the preceding claims when said computer program product is running on a computer.

12. System for determining at least one output data stream as configuration, comprising:
a. Receiving unit for receiving at least one input data stream (10) (S1);
b. Receiving unit for providing a plurality of match data streams (10) (S2), wherein
c. each data stream (10) comprises at least one action (12) ;
d. Preprocessing unit for preprocessing the plurality of match data streams (10) into processed match data streams (10) (S3); and
e. Determining unit for determining the at least one output data stream (10) as configuration by matching the at least one input data stream (10) to the plurality of processed match data streams (10) using pattern mining (S4).
